# EUROPEAN PATENT SPECIFICATION

(11) **EP 4 110 651 B1**
(45) Date of publication and mention of the grant of the patent: **02.04.2025**
(21) Application number: 21706939.2
(22) Date of filing: 19.02.2021
(51) Int. Cl.: B60Q 1/12, F21S 41/60

(54) **METHOD FOR CONTROLLING A LIGHT PATTERN AND AUTOMOTIVE LIGHTING DEVICE**
VERFAHREN ZUR STEUERUNG EINES LICHTMUSTERS UND KRAFTFAHRZEUGBELEUCHTUNGSVORRICHTUNG
PROCÉDÉ DE COMMANDE D'UN MODÈLE D'ÉCLAIRAGE ET DISPOSITIF D'ÉCLAIRAGE D'AUTOMOBILE

(30) Priority: 28.02.2020 FR 2002002
(43) Date of publication of application: 04.01.2023
(73) Proprietor: VALEO VISION, 93012 Bobigny Cedex (FR)
(72) Inventor: PRAT, Constantin, 93012 Bobigny - Cedex (FR); KANJ, Ali, 93012 Bobigny - Cedex (FR)
(74) Representative: Valeo Visibility
(86) International application number: PCT/EP2021/054240
(87) International publication number: WO 2021/170509

(56) References cited:
- EP-A2- 2 548 768
- WO-A1-2015/074891
- WO-A1-2017/214648

## Description

This invention is related to the field of automotive lighting devices, and more particularly, to the way light patterns are managed when using a Dynamic Bending Light (DBL) functionality.

Dynamic Bending Lights are increasingly present in current automotive lighting devices, becoming an upgrade to standard headlights and designed to make driving at night easier and safer.

To implement such a lighting functionality, there have been many solutions intended to provide a light pattern in the direction of the movement of the vehicle when it is entering a curve. Such methods are known from WO 2017/214648 A1, EP 2 548 768 A2 or WO 2015/074891 A1.

Mechanic-based solutions turn the lighting source as the steering wheel does, by means of an angular movement converter which directly uses the turning of the steering wheel to induce a turning in the lighting source. The lights will turn in whatever direction the wheel does, and this range of motion allows the lights to illuminate the road even when taking sharp turns or turning quickly.

This solution has received a huge number of improvements, so that the turning of the light source is more effective and also takes into account different driving circumstances.

An alternative solution for this problem is sought.

The invention provides an alternative solution for this problem by a method for controlling a light pattern provided by an automotive lighting device of an automotive vehicle according to claim 1.

This method provides a controlled light pattern which includes a Dynamic Bending Light functionality, provided by the same lighting device that provides, for example, the low beam and/or the high beam functionalities, without moving parts and also being able to adapt to other driving circumstances, such as the driving speed or the presence of cars in the opposite direction.

The method considers that the lighting device is able to project a matrix arrangement of light pixels, forming a light pattern, which can be done in many different ways, as the skilled person will know. The method is not restricted to any of them.

When the bending light command is received, the light pattern is divided into portions. At least two portions, the first one and the second one, are identified. Each of these two portions have columns which are located in the edge of the portion, so they are adjacent to the following portion. These columns are called boundary columns.

The method comprises the shifting of the boundary columns, thus involving a change in the width of the portions. This shifting movement leads to a "compression" or "expansion" of the columns of pixels which are inside the corresponding portion.

The shifting in the operation should be understood as displacing the column to the right or to the left, depending on the receiving bending light command: if the original pattern in one row is, e.g., 0-0-0-0-1-1-0, and this row is divided into two portions 0-0-0-0-1 and 1-0, after a 1 column shift to the left, the width of the first portion will be reduced, thus leading to 0-0-0-1, and the width of the second portion will be enlarged, thus leading to 1-0-0. The luminous intensity values of the remaining pixels will be duly interpolated.

According to the invention,
- each of the first and the second portion comprises an end column which is opposite to the corresponding boundary column and is not shifted during the shifting step, and
- the step of interpolating the luminous intensity values is performed by considering the luminous intensity values of the original width between the corresponding end column and the corresponding boundary column and interpolating new values for the new width of each portion.

These particular embodiments comprise a particular example of such an interpolation, which may be clarified with a more complex example. If a light pattern is provided 0-10-25-40-80-80-70-60-50-40-20-0, and is divided into two portions 0-10-25-40-80 and 80-70-60-50-40-20-0, the first portion will have a boundary value of 80 (the value of the boundary pixel) and an end value of 0 (the value of the end pixel, which is opposite to the boundary pixel) and the second portion will have a boundary value of 80 (the value of the boundary pixel) and an end value of 0 (the value of the end pixel, which is opposite to the boundary pixel).

If the shifting step comprises, e.g., 2 pixels to the right, the result in the first portion will be 0-x-x-x-x-x-80 (since the end value and the boundary value preserves its luminous intensity value, but now the portion includes two more pixels) and the result in the second portion will be 80-x-x-x-0 (since the end value and the boundary value preserves its luminous intensity value, but now the portion includes two less pixels).

In some particular embodiments, the interpolation of the new values is made by a bilinear method or a nearest neighbour method.

The bilinear method considers a first set of values with a first width and a final width, where this set of values should be converted to. The first width is defined by a first number of pixels (N1) and the final width is defined by a final number of pixels (N2), which can be higher or lower than the first number of pixels. A virtual abscissa segment [0, 1] is divided into N1-1 intervals, according to the first number of pixels. The ordinate values for the abscissa values are the values of the first set of values. Since they are discrete values, linear interpolations between vertices are provided. Then the same virtual interval is divided into N2-1 intervals, thus providing different abscissa values, but all of them also contained between 0 and 1. Since the first set of values defined a continuous function (due to the linear interpolation between vertices), the final abscissa values will find a correspondent value in the continuous function. These values will be the values of the final set of data. For example, the first set of values is (1 3 4 8 10), so the first width is 5, since there are 5 values. The final width is 9. The virtual segment [0, 1] is divided into N1-1=4 intervals with values 0, 0.25, 0.5, 0.75, 1. A function is defined by the vertices defined by the following pairs abscissa-ordinate: (0, 1), (0.25, 3), (0.5, 4), (0.75, 8), (1, 10). Linear interpolations are established between vertices. Now, for the final set of values, the interval is divided into N2-1=8 intervals with values 0, 0.125, 0.25, 0.375, 0.5, 0.625, 0.75, 0.875, 1. The function values for these abscissa values are located, which will be (1 1.5 3 3.5 4 6 8 9 10), so these will be the values of the final set of data.

The method of nearest neighbour considers a first width and a final width and it finds the ratio between first width and final width. Then a normalizing set of values are obtained by dividing the numbers of the final width by the calculated ratio. Finally, for each normalized value of the normalized set of values, the least integer greater or equal value (e.g. ceil function) is calculated, thus obtaining a set of index values. These are the index values in the first vector leading to interpolation. For example: if the first vector is [10 2 9], and should be interpolated into a vector of width of 6. The ratio is 6/3 = 2. The normalized set of values will be (1/2, 2/2, 3/2, 4/2, 5/2, 6/2 = 0.5, 1, 1.5, 2, 2.5, 3 ). Performing ceil function, we obtain the index set of values ceil[( 0.5, 1, 1.5, 2, 2.5, 3 )] = 1, 1, 2, 2, 3, 3. The interpolated vector is then represented by [first_vector(1) first_vector(1) first_vector(2) first_vector(2) first_vector(3) first_vector(3) ] which would be [10 10 2 2 9 9].

According to the invention, the bending light command comprises a number of positions to shift and a shifting direction, and then the step of shifting the position of the boundary columns is carried out using this number of positions to shift in the shifting direction.

The matrix of solid-state light sources may have many different angular resolutions. Depending on the number and arrangement of these light sources, resolution may vary from 0.01° per light source up to 0.5° per light source. Hence, the angular position of the steering wheel may be translated in a different number of columns of the light array, depending on the density of these light sources in the array arrangement.

In some particular embodiments, the light pattern is divided into two portions and the division is performed so half of the light columns belong to the first portion and the other half to the second portion.

This is particularly advantageous in symmetric light patterns, where the two portions are symmetric with respect to the boundary columns.

In other particular embodiments, the light pattern is divided into at least the first portion, the second portion and a central portion, wherein
- the central portion comprises a first boundary column adjacent to the boundary column of the first portion and a second boundary column adjacent to the boundary of the second portion; and
- the step of modifying the width of the first and second portions also involves shifting the central portion in the same way as the boundary columns of the first and second portions, but without modifying the width or the luminous intensity values of the central portion.

In some cases, a central portion must be preserved without compression or expansion, due to light requirements (intensity or shape of the cut-off portion). This central portion is located between the first and the second portions, so it will have a first boundary column adjacent to the first portion and a second boundary column adjacent to the second portion. Contrary to the other ones, the shifting step does not affect to the width of the central portion, the intensity values are only shifted, but do not vary.

In some particular embodiments, the light pattern is a low beam pattern comprising a kink zone and the central portion contains the kink zone.

The cut-off or kink is a diagonal line of the low beam pattern, and its shape is important in automotive regulations. The fact that this kink belongs to the central portion means that this kink is being shifted when the vehicle turns. This is advantageous since the shifted pattern must also comply with the regulations.

In some particular embodiments, the light pattern is a high beam pattern comprising a maximum luminous intensity pixel and the central portion contains the maximum luminous intensity pixel.

The maximum intensity zone is also an advantageous zone to be protected in the central zone.

In some particular embodiments, the width of the central portion is chosen so that the first portion and the right portion have the same luminous flux.

The width of the central portion may be chosen, parting from a particular zone to be protected, it may extend more to the left or to the right to compensate the flux difference between the first and second portions. This means that the final flux will remain constant after the shifting step.

In a further inventive aspect, the invention provides an automotive lighting device comprising
- a matrix arrangement of solid-state light sources, intended to provide a light pattern; and
- a control unit configured to perform the steps of a method according to the first inventive aspect.

This automotive lighting device is configured to provide a Dynamic Bending Light functionality without moving parts, and using elements which are already available, but with a new configuration.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the matrix arrangement comprises at least 2000 solid-state light sources.

This invention can be useful for many types of lighting matrix/array-based technology, from the simplest one, with only a few thousands light sources, to more advanced ones, with several hundred thousand light sources.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a general perspective view of an automotive vehicle comprising an automotive lighting device according to the invention.
[Fig. 2] shows an example of light pattern projected by this lighting device. This pattern corresponds to a low beam functionality.
[Fig. 3] shows a non-representative example of luminous intensity values for such a pattern.
[Fig. 4a] and [Fig. 4b] show the effect of two columns to the left bending light command, according to a particular embodiment of a method according to the invention.
[Fig. 5] shows an example of a light pattern which has undergone the shifting step of a method according to the invention.
[Fig. 6a] and [Fig. 6b] show a different example of a method according to the invention.

Elements of the example embodiments are consistently denoted by the same reference numerals throughout the drawings and detailed description where appropriate:
1 Light pattern
2 LED
3 Boundary column of the first portion
4 Boundary column of the second portion
5 End column of the first portion
6 End column of the second portion
7 First boundary column of the central portion
8 Second boundary column of the central portion
9 Control unit
10 Automotive lighting device
11 First portion
12 Second portion
13 Central portion
14 Kink zone
15 Maximum intensity pixel
16 Steering system
100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

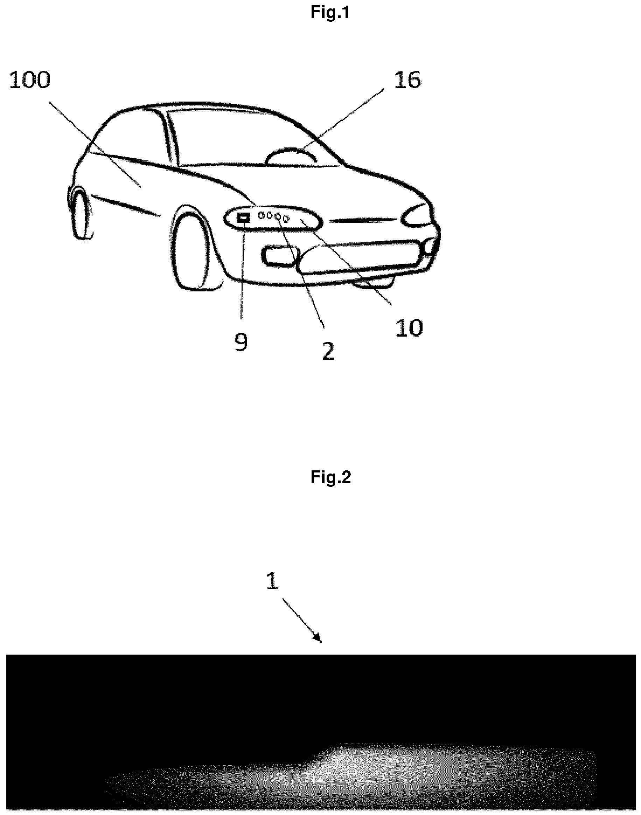

Figure 1 shows a general perspective view of an automotive vehicle 100 comprising an automotive lighting device 10 according to the invention.

This automotive vehicle 100 comprises a steering system 16 and a lighting device 10. The lighting device 10 comprises a matrix arrangement of LEDs 2 and a control centre 9 which is configured to control the operation of these groups of LEDs.

The control centre 9 is configured to modify the configuration of the LEDs 2 when the steering wheel of the vehicle is activated.

The matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement 6. The control centre is thus able to individually control the light emission of each pixel of the matrix arrangement.

Alternatively to what has been presented above, the matrix arrangement 6 may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

Figure 2 shows an example of light pattern 1 projected by this lighting device. This pattern corresponds to a low beam functionality.

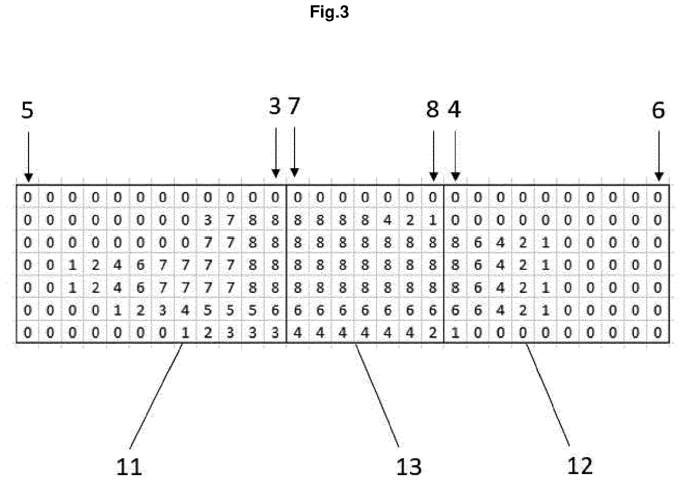

Figure 3 shows a non-representative example of luminous intensity values for such a pattern. Since the original pattern has thousands of pixels, it will not be useful to represent all of them, but only a small representation has been chosen for the sake of clarity.

Further, although the standard use will be luminous intensity values from 0 to 255, according to a standard grey scale, in this example only numbers from 0 to 9 will be used, to keep the example as simple as possible.

This light pattern is divided into three portions: a first portion 11, a second portion 12 and a central portion 13. The first portion has a boundary column 3, which is adjacent to a first boundary column 7 of the central portion 13, and an end column 5, which is opposite to it. The second portion 12 has in turn a boundary column 4, which is adjacent to a second boundary column 8 of the central portion 13, and an end column 6, which is opposite to it. The central portion 13 has the first 7 and second 8 boundary columns.

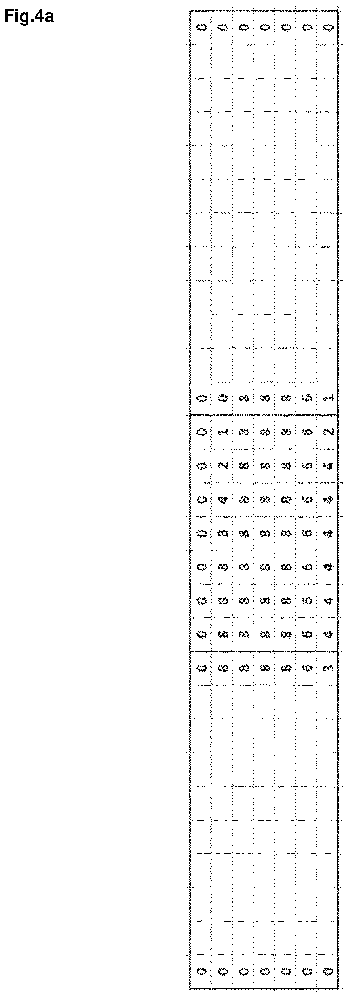

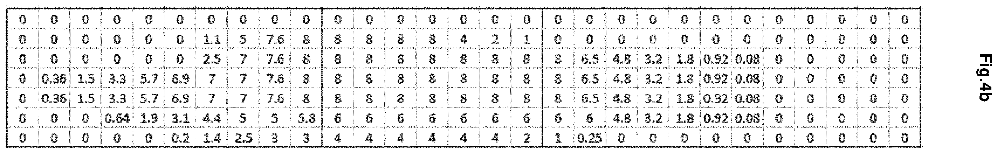

Figures 4a and 4b show the effect of two columns to the left bending light command, according to a particular embodiment of a method according to the invention.

Figure 4a shows a first sub-step: the boundary columns are shifted to the left. The central portion remains the same, but shifted, while in the first and second portions, only the boundary columns and the end columns preserve their value.

Figure 4b shows the interpolation of the rest of the values of the first and second portions. This is done by rows, adapting the values to the original ones, by "expanding" or "compressing" the intensity patterns following a linear interpolation.

Choosing for example the central row, in the original pattern, this row had the values 0-0-1-2-4-6-7-7-7-7-8-8-8-8-8-8-8-8-8-8-6-4-2-1-0-0-0-0-0. This row, according to the division, will have a first portion 0-0-1-2-4-6-7-7-7-7-8-8, a second portion 8-6-4-2-1-0-0-0-0-0 and a central portion 8-8-8-8-8-8-8.

Since the bending command includes two columns to the left, the first portion will have the following pattern: 0-x-x-x-x-x-x-x-x-8, the second portion will be 8-x-x-x-x-x-x-x-x-x-x-0 and the central portion will be 8-8-8-8-8-8-8, but shifted two positions to the left, as shown in Figure 4a.

The values x of the first portion will be calculated with respect to the data provided by the original first portion: at 8% the value is 0, at 17% the value is 1, at 25% the value is 2, at 33% the value is 4, at 42% the value is 6, at 50% the value is 7, at 58% the value is 7, at 67% the value is 7, at 75% the value is 7, at 83% the value is 8 and at 100% the value is 8.

This provides a curve, and the values at 10%, 20%, 30%, 40%, 50%, 60%, 70%, 80%, 90% and 100% will be calculated for the new width of the first portion, since this compressed first portion only contains 10 pixels, against the 12 pixels of the original first portion. Hence, the new values for this interval will be 0 - 0.4 - 1.5 - 3.3 - 5.6 - 6.9 - 7 - 7 - 7.6 - 8

The same will be performed with the second portion: in the original second portion, at 10% the value is 8, at 20% is 6, at 30% is 4, at 40% is 2, at 50% is 1, and from 60% to 100%, the value is 0. For the new second portion, values will be calculated at at 8%, at 17%, at 25%, at 33%, at 42%, at 50%, at 58%, at 67%, at 75%, at 83% and at 100%. Hence, the new values for this interval will be 8 - 6.5 - 4.8 - 3.2 - 1.8 - 0.9 - 0.1 - 0 - 0 - 0 - 0 - 0

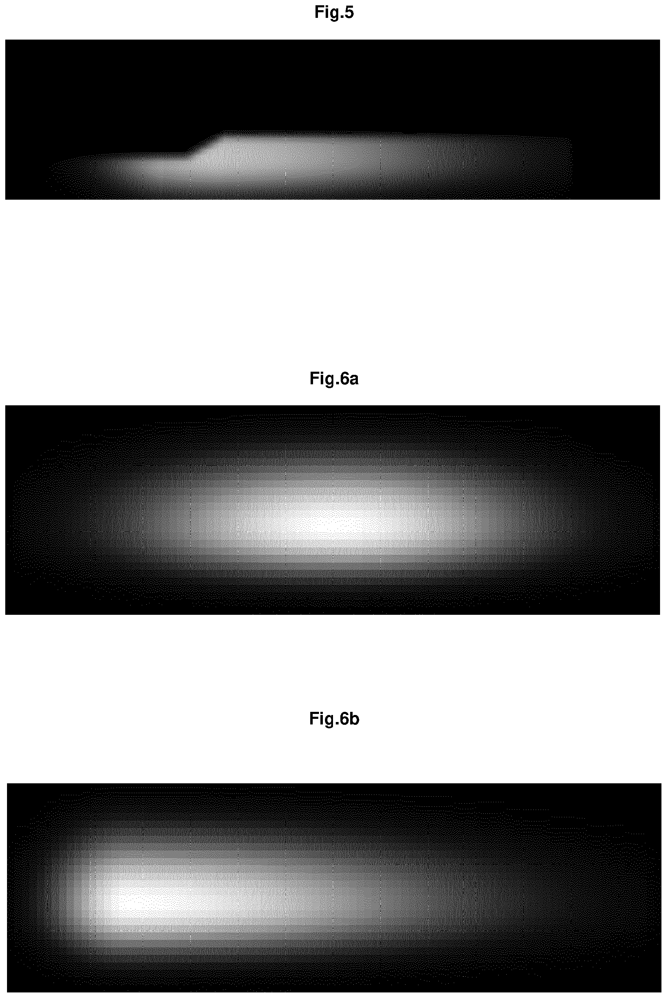

Figure 5 shows an example of a light pattern which has undergone this shifting step. The central portion remains unchanged, but shifted to the left, while the left and right portions have been compressed and expanded.

Figures 6a and 6b show a different example of a method according to the invention.

Figure 6a shows a high beam light pattern, which is also divided into three portions. When receiving a bending light command to shift 20 pixels to the left, the central portion, which comprises the maximum intensity values, is shifted but without any width variation.

Figure 6b shows the effect of this modification. The first portion is compressed and the second portion is expanded according to the previously explained algorithm.

## Claims

1. Method for controlling a light pattern (1) provided by an automotive lighting device (10) of an automotive vehicle (100), wherein the light pattern (1) comprises a matrix arrangement of light pixels, each light pixel being **characterized by** a luminous intensity value, the method comprising the steps of
- receiving a bending light command from the automotive vehicle (100);
the method being **characterized by**:
- dividing the light pattern (1) in at least a first portion (11) and a second portion (12), wherein each portion (11, 12, 13) comprises at least a boundary column (3, 4) which is in contact with the boundary column of an adjacent portion;
- modifying the width of the first portion (11) and the width of the second portion (12) by shifting the position of the boundary columns (3, 4) and interpolating the luminous intensity values of the pixels belonging to the first and second portion (11, 12), wherein the boundary columns (3, 4) that were adjacent before the shifting remain adjacent after the shifting;
- each of the first and the second portion (11, 12) comprises an end column (5, 6) which is opposite to the corresponding boundary column (3, 4) and is not shifted during the shifting step;
- the step of interpolating the luminous intensity values is performed by considering the luminous intensity values of the original width between the corresponding end column (5, 6) and the corresponding boundary column (3, 4) and interpolating new values for the new width of each portion; and
- wherein the bending light command comprises a number of positions to shift and a shifting direction, and then the step of shifting the position of the boundary columns is carried out using this number of positions to shift in the shifting direction.

2. Method according to claim 1 wherein the interpolation of the new values is made by a bilinear method or a nearest neighbour method.

3. Method according to any of the preceding claims, wherein the light pattern is divided into two portions and the division is performed so half of the light columns belong to the first portion (11) and the other half to the second portion (12).

4. Method according to any of claims 1 to 3, wherein the light pattern is divided into at least the first portion (11), the second portion (12) and a central portion (13), wherein
- the central portion (13) comprises a first boundary column (7) adjacent to the boundary column (3) of the first portion (11) and a second boundary column (8) adjacent to the boundary column (4) of the second portion (12); and
- the step of modifying the width of the first and second portions (11, 12) also involves shifting the central portion (13) in the same way as the boundary columns (3, 4) of the first and second portions (11, 12), but without modifying the width or the luminous intensity values of the central portion (13).

5. Method according to claim 4, wherein the light pattern is a low beam pattern comprising a kink zone (14) and the central portion (13) contains the kink zone (14).

6. Method according to claim 4, wherein the light pattern is a high beam pattern comprising a maximum luminous intensity pixel (15) and the central portion (13) contains the maximum luminous intensity pixel (15).

7. Method according to any of claims 4 to 6, wherein the width of the central portion (13) is chosen so that the first portion (11) and the right portion (12) have the same luminous flux.

8. Automotive lighting device (10) comprising
- a matrix arrangement of solid-state light sources (2), intended to provide a light pattern (1); and
- a control unit (9) configured to perform the steps of a method according to any of the preceding claims.

9. Automotive lighting device according to claim 8, wherein the matrix arrangement comprises at least 2000 solid-state light sources (2).

## Patentansprüche

1. Verfahren zum Steuern eines Lichtmusters (1), das von einer Kraftfahrzeugbeleuchtungsvorrichtung (10) eines Kraftfahrzeugs (100) bereitgestellt wird, wobei das Lichtmuster (1) eine Matrixanordnung von Lichtpixeln umfasst, wobei jedes Lichtpixel durch einen Lichtstärkewert gekennzeichnet ist, das Verfahren die folgenden Schritte umfassend
- Empfangen eines Biegelichtbefehls aus dem Kraftfahrzeug (100);
das Verfahren **gekennzeichnet durch**:
- Aufteilen des Lichtmusters (1) in mindestens einen ersten Abschnitt (11) und einen zweiten Abschnitt (12), wobei jeder Abschnitt (11, 12, 13) mindestens eine Begrenzungssäule (3, 4) umfasst, die in Kontakt mit der Begrenzungssäule eines benachbarten Abschnitts ist;
- Modifizieren der Breite des ersten Abschnitts (11) und der Breite des zweiten Abschnitts (12) durch Verschieben der Position der Begrenzungssäulen (3, 4) und Interpolieren der Lichtstärkewerte der Pixel, die zu dem ersten und dem zweiten Abschnitt (11, 12) gehören, wobei die Begrenzungssäulen (3, 4), die vor dem Verschieben benachbart waren, nach dem Verschieben benachbart bleiben;
- jeder des ersten und des zweiten Abschnitts (11, 12) eine Endsäule (5, 6) umfasst, die der entsprechenden Begrenzungssäule (3, 4) entgegengesetzt ist und während des Schritts des Verschiebens nicht verschoben wird;
- der Schritt des Interpolierens der Lichtstärkewerte unter Berücksichtigung der Lichtstärkewerte der ursprünglichen Breite zwischen der entsprechenden Endsäule (5, 6) und der entsprechenden Begrenzungssäule (3, 4) und durch Interpolieren neuer Werte für die neue Breite jedes Abschnitts durchgeführt wird; und
- wobei der Biegelichtbefehl eine Anzahl von Positionen zum Verschieben und eine Verschieberichtung umfasst und dann der Schritt des Verschiebens der Position der Begrenzungssäulen unter Verwendung dieser Anzahl von Positionen zum Verschieben in die Verschieberichtung ausgeführt wird.

2. Verfahren nach Anspruch 1, wobei die Interpolation der neuen Werte durch ein bilineares Verfahren oder ein Verfahren nächster Nachbarn durchgeführt wird.

3. Verfahren nach einem der vorhergehenden Ansprüche, wobei das Lichtmuster in zwei Abschnitte aufgeteilt ist und die Aufteilung so durchgeführt wird, dass die Hälfte der Lichtsäulen zu dem ersten Abschnitt (11) gehört und die andere Hälfte zu dem zweiten Abschnitt (12) gehört.

4. Verfahren nach einem der Ansprüche 1 bis 3, wobei das Lichtmuster in mindestens den ersten Abschnitt (11), den zweiten Abschnitt (12) und einen zentralen Abschnitt (13) aufgeteilt ist, wobei
- der zentrale Abschnitt (13) eine erste Begrenzungssäule (7) benachbart zu der Begrenzungssäule (3) des ersten Abschnitts (11) und eine zweite Begrenzungssäule (8) benachbart zu der Begrenzungssäule (4) des zweiten Abschnitts (12) umfasst; und
- der Schritt des Modifizierens der Breite des ersten und des zweiten Abschnitts (11, 12) auch das Verschieben des zentralen Abschnitts (13) in der gleichen Weise wie die Begrenzungssäulen (3, 4) des ersten und des zweiten Abschnitts (11, 12) umfasst, jedoch ohne die Breite oder die Lichtstärkewerte des zentralen Abschnitts (13) zu modifizieren.

5. Verfahren nach Anspruch 4, wobei das Lichtmuster ein Abblendlichtmuster ist, das eine Knickzone (14) umfasst, und der zentrale Abschnitt (13) die Knickzone (14) enthält.

6. Verfahren nach Anspruch 4, wobei das Lichtmuster ein Fernlichtmuster ist, das ein Pixel mit maximaler Lichtstärke (15) umfasst, und der zentrale Abschnitt (13) das Pixel mit maximaler Lichtstärke (15) enthält.

7. Verfahren nach einem der Ansprüche 4 bis 6, wobei die Breite des zentralen Abschnitts (13) so ausgewählt ist, dass der erste Abschnitt (11) und der rechte Abschnitt (12) den gleichen Lichtstrom aufweisen.

8. Kraftfahrzeugbeleuchtungsvorrichtung (10), Folgendes umfassend
- eine Matrixanordnung von Halbleiterlichtquellen (2), die vorgesehen ist, ein Lichtmuster (1) bereitzustellen; und
- eine Steuereinheit (9), die eingerichtet ist, um die Schritte eines Verfahrens nach einem der vorhergehenden Ansprüche durchzuführen.

9. Kraftfahrzeugbeleuchtungsvorrichtung nach Anspruch 8, wobei die Matrixanordnung mindestens 2000 Halbleiterlichtquellen (2) umfasst.

## Revendications

1. Procédé destiné à contrôler un motif lumineux (1) fourni par un dispositif d'éclairage automobile (10) d'un véhicule automobile (100), dans lequel le motif lumineux (1) comprend un agencement matriciel de pixels lumineux, chaque pixel lumineux étant **caractérisé par** une valeur d'intensité lumineuse, le procédé comprenant les étapes de
- réception d'une commande d'éclairage directionnel provenant du véhicule automobile (100) ;
le procédé étant **caractérisé par** :
- la division du motif lumineux (1) en au moins une première partie (11) et une deuxième partie (12), chaque partie (11, 12, 13) comprenant au moins une colonne limite (3, 4) qui est en contact avec la colonne limite d'une partie adjacente ;
- la modification de la largeur de la première partie (11) et de la largeur de la deuxième partie (12) par décalage de la position des colonnes limites (3, 4) et interpolation des valeurs d'intensité lumineuse des pixels appartenant à la première et la deuxième partie (11, 12), dans lequel les colonnes limites (3, 4) qui étaient adjacentes avant le décalage restant adjacentes après le décalage ;
- chacune des première et deuxième parties (11, 12) comprend une colonne d'extrémité (5, 6) qui se situe à l'opposé de la colonne limite correspondante (3, 4) et n'est pas décalée pendant l'étape de décalage ;
- l'étape d'interpolation des valeurs d'intensité lumineuse est effectuée en tenant compte des valeurs d'intensité lumineuse de la largeur initiale entre la colonne d'extrémité correspondante (5, 6) et la colonne limite correspondante (3, 4) et en interpolant de nouvelles valeurs pour la nouvelle largeur de chaque partie ; et
- dans lequel la commande d'éclairage directionnel comprend un nombre de positions à décaler et une direction de décalage, et l'étape de décalage de la position des colonnes limites est ensuite réalisée au moyen de ce nombre de positions à décaler dans la direction de décalage.

2. Procédé selon la revendication 1 dans lequel l'interpolation des nouvelles valeurs est réalisée par une méthode bilinéaire ou une méthode de plus proches voisins.

3. Procédé selon l'une quelconque des revendications précédentes, dans lequel le motif lumineux est divisé en deux parties et la division est effectuée pour que la moitié des colonnes lumineuses appartiennent à la première partie (11) et l'autre moitié à la deuxième partie (12).

4. Procédé selon l'une quelconque des revendications 1 à 3, dans lequel le motif lumineux est divisé au moins en la première partie (11), la deuxième partie (12) et une partie centrale (13), dans lequel
- la partie centrale (13) comprend une première colonne limite (7) adjacente à la colonne limite (3) de la première partie (11) et une deuxième colonne limite (8) adjacente à la colonne limite (4) de la deuxième partie (12) ; et
- l'étape de modification de la largeur des première et deuxième parties (11, 12) implique également le décalage de la partie centrale (13) de la même manière que les colonnes limites (3, 4) des première et deuxième parties (11, 12), mais sans modification de la largeur ni des valeurs d'intensité lumineuse de la partie centrale (13).

5. Procédé selon la revendication 4, dans lequel le motif lumineux est un motif de feu de croisement comprenant une zone coudée (14) et la partie centrale (13) contient la zone coudée (14).

6. Procédé selon la revendication 4, dans lequel le motif lumineux est un motif de feu de route comprenant un pixel d'intensité lumineuse maximale (15) et la partie centrale (13) contient le pixel d'intensité lumineuse maximale (15).

7. Procédé selon l'une quelconque des revendications 4 à 6, dans lequel la largeur de la partie centrale (13) est choisie de telle sorte que la première partie (11) et la partie droite (12) ont le même flux lumineux.

8. Dispositif d'éclairage automobile (10) comprenant
- un agencement matriciel de sources de lumière à semi-conducteurs (2), destiné à fournir un motif lumineux (1) ; et
- une unité de commande (9) conçue pour effectuer les étapes d'un procédé selon l'une quelconque des revendications précédentes.

9. Dispositif d'éclairage automobile selon la revendication 8, dans lequel l'agencement matriciel comprend au moins 2000 sources de lumière à semi-conducteurs (2).
